# EUROPEAN PATENT APPLICATION

(11) **EP 4 818 599 A1**
(43) Date of publication of application: **07.10.2026**
(21) Application number: 24896777.0
(22) Date of filing: 30.11.2024
(51) Int. Cl.: F25B 41/34

(54) **ELECTRONIC EXPANSION VALVE**

(30) Priority: 30.11.2023 CN 202323246160 U; 12.07.2024 CN 202421651048 U; 26.09.2024 CN 202422362794 U
(71) Applicant: Zhejiang Dunan Artificial Environment Co., Ltd., Shaoxing Zhejiang 311835 (CN)
(72) Inventor: YANG, Zhongyu, Shaoxing, Zhejiang 311835 (CN); LI, Zhepeng, Shaoxing, Zhejiang 311835 (CN); FANG, Qidi, Shaoxing, Zhejiang 311835 (CN)
(74) Representative: Petraz, Gilberto Luigi
(86) International application number: PCT/CN2024/135976
(87) International publication number: WO 2025/113698

(57) **Abstract**

An electronic expansion valve (A) is provided. An electronic expansion valve (A) includes a valve core assembly (400) and a valve seat assembly (500), the valve seat assembly (500) is provided with a valve port portion (510), and the valve core assembly (400) can open or close the valve port portion (510). The electronic expansion valve (A) further includes a guide seat (820), the guide seat (820) is disposed at an end of the valve seat assembly (500) away from the valve port portion (510), and the valve core assembly (400) is movably engaged with the guide seat (820) along a predetermined axial direction.

## Description

### CROSS-REFERENCE TO RELATED APPLICATIONS

This application claims priority to Chinese Patent Application No. 202323246160.8, filed on November 30, 2023, entitled "ELECTRONIC EXPANSION VALVE"; No. 202421651048.4, filed on July 12, 2024, entitled "ELECTRONIC EXPANSION VALVE" and No. 202422362794.8, filed on September 26, 2024, entitled "ELECTRONIC EXPANSION VALVE", the contents of which are hereby incorporated by reference in their entireties.

### TECHNICAL FIELD

The present application relates to the field of valve bodies technology, and in particular, to an electronic expansion valve.

### BACKGROUND

An electronic expansion valve is used as a throttling element to adjust the on-off and flow of the fluid. The electronic expansion valve includes a rotor assembly, a lead screw, a valve core assembly, and a stop seat. The rotor assembly drives the lead screw to rotate spirally, the lead screw is partially provided with external threads, the lead screw is threadedly connected with the valve core assembly, and the valve core assembly is in limiting connection with the stop seat. When the rotor assembly drives the lead screw to rotate, the valve core assembly only moves vertically along an axial direction.

In this solution, a structure such as a sliding groove in limiting engagement with the valve core assembly needs to be machined on the stop seat, thereby increasing machining difficulty of the stop seat.

Therefore, how to reduce a processing difficulty of the stop seat is a technical problem to be solved in the present application.

### SUMMARY

Based on this, it is necessary to provide an electronic expansion valve to solve the problems of difficulty in processing and assembly of the stop seats in the related art.

An electronic expansion valve provided in the present application includes a valve core assembly and a valve seat assembly. The valve seat assembly is provided with a valve port portion, and the valve core assembly is configured to open or close the valve port portion. The electronic expansion valve further includes a guide seat. The guide seat is disposed at an end of the valve seat assembly away from the valve port portion. The valve core assembly is movably engaged with the guide seat along a predetermined axial direction.

In an embodiment, the guide seat is connected to the valve seat assembly in an interference fit manner.

In an embodiment, the electronic expansion valve further includes a stop seat, and a top of the guide seat extends into the stop seat.

In an embodiment, the valve core assembly includes a sliding portion, the sliding portion includes a nut body and an anti-rotation protrusion. The anti-rotation protrusion is fixedly disposed on an outer peripheral side of the nut body. The guide seat is provided with a main body channel and a limiting channel in communication with the main body channel. The nut main body is movably engaged with the main body channel along the predetermined axial direction. The anti-rotation protrusion is movably engaged with the limiting channel along the predetermined axial direction and is in limiting engagement with the limiting channel along a circumferential direction around the predetermined axial direction. The limiting channel is disposed on a side of the main body channel along the predetermined axial direction.

In an embodiment, the guide seat is in a cylindrical shape, the main body channel and the guide seat are coaxially arranged, and the limiting channel is disposed on a side wall of the guide seat along the predetermined axial direction.

In an embodiment, a first connecting member is fixedly sleeved on an outer peripheral side of the guide seat.

In an embodiment, the first connecting member is provided with a through channel penetrating through the first connecting member along the predetermined axial direction. The through channel is in communication with an end of the limiting channel away from the main body channel.

In an embodiment, the guide seat is provided with a convex rib. The valve seat assembly is provided with a clamping protrusion corresponding to the convex rib. The clamping protrusion can be clamped into a groove formed after the convex rib is deformed along the predetermined axial direction to prevent the guide seat from rotating relative to the valve seat assembly.

In an embodiment, the end of the valve seat assembly adjacent to the guide seat is provided with a first limiting protrusion and a second limiting protrusion opposite to each other. The guide seat is sandwiched between the first limiting protrusion and the second limiting protrusion.

In an embodiment, the guide seat is configured as a metal member.

In an embodiment, the valve seat assembly includes a first seat body and a second seat body. The first seat body has a first mounting groove and an end portion of the second seat body is located in the first mounting groove. A second connecting member is disposed on an outer periphery of the guide seat, and the second connecting member is sandwiched between a bottom wall of the first mounting groove and the end portion of the second seat body. 13. The electronic expansion valve of claim 11, a circumferential outer wall of the second connecting member is spaced apart from a circumferential inner wall of the first mounting groove.

In an embodiment, the outer periphery of the guide seat is further provided with a first connecting member, and the second connecting member is located on an outer periphery of the first connecting member. The first seat body is provided with a second mounting groove, the bottom wall of the first mounting groove is recessed away from the valve port to form the second mounting groove, and a circumferential outer wall of the first connecting member is fixedly connected to a circumferential inner wall of the second mounting groove.

In an embodiment, the circumferential outer wall of the first connecting member is threadedly connected with the circumferential inner wall of the second mounting groove.

In an embodiment, an end of the first connecting member away from the second connecting member is spaced apart from a bottom wall of the second mounting groove.

In an embodiment, the valve core assembly includes a second valve needle, the second valve needle is provided with a sealing member, a hardness of the sealing member is less than that of the valve port portion, and the sealing member is in sealing engagement with the valve port portion.

Compared with the related art, in the electronic expansion valve provided by the present application, since the guide seat is an independent component, the guide seat can be processed independently, which greatly reduces the processing difficulty of the guide seat.

In an embodiment, the valve seat assembly is provided with a valve cavity, and the valve port portion includes a first valve port; at least part of the guide seat is disposed in the valve cavity and fixedly connected to the valve seat assembly. One of the valve seat assembly and the guide seat with a greater material hardness is provided with a positioning protrusion, the positioning protrusion abuts against the other one of the valve seat assembly and the guide seat, and a material hardness of the positioning protrusion is greater than the material hardness of the valve seat assembly or the material hardness of the guide seat against which it abuts, so as to position the valve seat assembly and the guide seat axially and circumferentially.

In an embodiment, a cavity wall of the valve cavity is provided with a first positioning surface, the first positioning surface is facing the guide seat, and the guide seat has a second positioning surface facing the first positioning surface; and the positioning protrusion is located on one of the first positioning surface and the second positioning surface, and the positioning protrusion abuts against the other of the first positioning surface and the second positioning surface.

In an embodiment, the valve seat assembly includes a valve core sleeve and a valve cover connected along the axial direction of the valve seat assembly, the valve core sleeve is provided with a first cavity penetrating along the axial direction of the valve seat assembly. The valve cover is provided with a second cavity penetrating along the axial direction of the valve seat assembly, and the first valve port is disposed at an end of the valve core sleeve facing away from the valve cover. An end surface of the valve core sleeve facing an end of the valve cover partially forms the first positioning surface.

In an embodiment, the positioning protrusion is disposed on the first positioning surface, a first opening is disposed at an end of the valve core sleeve facing the valve cover, and the first opening is in communication with the first cavity, such that the end surface of the valve core sleeve facing the valve cover is in an annular shape; and the positioning protrusion is disposed on an inner edge of the end surface of the valve core sleeve.

In an embodiment, a cavity wall of the first cavity at the first opening is provided with an inclined surface, and the inclined surface and a side surface of the positioning protrusion are connected as an integrated guide inclined surface.

In an embodiment, a cavity wall of the second cavity is provided with a third positioning surface, the third positioning surface faces the first positioning surface and is disposed at intervals along the axial direction of the valve seat assembly, such that a positioning cavity is defined between the first positioning surface and the third positioning surface in the valve cavity. An outer periphery of the guide seat is provided with a positioning boss, the positioning boss is at least partially accommodated in the positioning cavity, the positioning boss has a fourth positioning surface facing the valve cover and abuts against the third positioning surface.

Details of one or more embodiments of the present application are presented in the attached drawings and descriptions below. And other features, purposes and advantages of the present application will become apparent from the description, drawings and claims.

### BRIEF DESCRIPTION OF THE DRAWINGS

In order to more clearly illustrate the technical solutions in the embodiments of the present application or the conventional technology, the drawings required to be used in the description of the embodiments or the conventional technology will be briefly introduced below, and it is obvious that the drawings in the following description are only some embodiments of the present application, and those of ordinary skill in the art can obtain other drawings according to these drawings without creative efforts.
FIG. 1 is a schematic view of an electronic expansion valve in an embodiment of the present application.
FIG. 2 is a cross-sectional view of an electronic expansion valve in an embodiment of the present application.
FIG. 3 is a schematic view of a rotor assembly and a guide rod in an embodiment of the present application.
FIG. 4 is a partial exploded view of an electronic expansion valve in an embodiment of the present application.
FIG. 5 is a schematic view of a guide seat in an embodiment of the present application.
FIG. 6 is a schematic view of a mounting position of a guide seat in an embodiment of the present application.
FIG. 7 is a schematic view of a first seat body in an embodiment of the present application.
FIG. 8 is a schematic view of another structure of a guide seat in an embodiment of the present application.
FIG. 9 is an axial sectional view of the electronic expansion valve in FIG. 1.
FIG. 10 is an enlarged view of part C of the electronic expansion valve in FIG. 9.
FIG. 11 is a schematic perspective view of some components of the electronic expansion valve in FIG. 1.
FIG. 12 is a perspective exploded sectional view of the electronic expansion valve in FIG. 11.
FIG. 13 is a perspective view of the valve core sleeve in FIG. 11.
FIG. 14 is a schematic three-dimensional structural view of a valve core sleeve of an electronic expansion valve in an embodiment of the present application.

In the figures, A represents an electronic expansion valve; 100 represents a housing; 200 represents a rotor assembly; 300 represents a lead screw; 400 represents a valve core assembly; 410 represents a sliding portion; 411 represents a nut main body; 412 represents an anti-rotation protrusion; 420 represents a first valve needle; 430 represents a second valve needle; 431 represents an adjustment channel; 440 represents a valve core sleeve; 4401 represents a first opening; 4402 represents a guide inclined surface; 442 represents a valve cover; 4421 represents a third positioning surface; 500 represents a valve seat assembly; 510 represents a valve port portion; 511 represents a first valve port; 512 represents a first positioning surface; 513 represents a positioning protrusion; 520 represents a clamping protrusion; 530 represents a first limiting protrusion; 540 represents a second limiting protrusion; 600 represents a stop ring; 700 represents a guide rod; 800 represents a stop seat; 810 represents an outer guide portion; 820 represents a guide seat; 821 represents a main body channel; 8210 represents a positioning boss; 82101 represents a second positioning surface; 82102 represents a fourth positioning surface; 822 represents a limiting channel; 823 represents a first connecting member; 824 represents a through channel; 825 represents a convex rib; 910 represents a first elastic member; 920 represents a second elastic member; 1-1 represents a first mounting groove; 1-2 represents a second connecting member; 1-3 represents a second mounting groove; 1-4 represents a sealing member; 1-5 represents a first seat body; 1-6 represents a second seat body; 1-7 represents a mounting body; and 101 represents a valve cavity.

### DETAILED DESCRIPTION

The following clearly and completely describes the technical solutions in the embodiments of the present application with reference to the accompanying drawings in the embodiments of the present application. All other embodiments obtained by a person of ordinary skill in the art based on the embodiments of the present application without creative efforts shall fall within the protection scope of the present application.

In the description of the present application, it should be understood that the orientation or positional relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. is based on the orientation or positional relationship shown in the drawings, and is only for the convenience of describing the present application and simplifying the description, rather than indicating or implying that the device or element referred to must have a particular orientation, be constructed and operated in the particular orientation, and therefore cannot be construed as limiting the present application.

In addition, the terms "first" and "second" are only used for descriptive purposes, and cannot be understood as indicating or implying relative importance or implicitly indicating the number of indicated technical features. Therefore, features defined with "first" and "second" may explicitly or implicitly include at least one of the features. In the description of the present application, "a plurality of" means at least two, such as two, three, etc., unless otherwise specifically defined.

In the present application, unless otherwise expressly specified and limited, the terms "mounted", "connected", "coupled", "fixed" and the like should be understood in a broad sense, for example, it may be a fixed connection, a detachable connection, or an integral connection; it may be a mechanical connection or an electrical connection; it may be a direct connection or an indirect connection through an intermediate medium; it may be an internal communication between two elements or an interaction relationship between two elements, unless otherwise expressly limited. A person of ordinary skill in the art may understand specific meanings of the foregoing terms in the present application based on a specific situation.

In the present application, unless otherwise expressly specified and defined, a first feature being "on" or "under" a second feature may mean that the first and second features are in direct contact, or the first and second features are in indirect contact through an intermediate medium. Moreover, the first feature being "on", "above" and "over" the second feature may mean that the first feature is directly above or obliquely above the second feature, or simply means that the first feature is higher in level than the second feature. The first feature being "underneath", "below" and "under" the second feature may mean that the first feature is directly under or obliquely under the second feature, or merely means that the level of the first feature is less than that of the second feature.

It should be noted that when an element is referred to as being "fixed to" or "disposed on" another element, it may be directly on the other element or there may be an intermediate element. When an element is referred to as being "connected" to another element, it can be directly connected to the other element or intervening elements may also be present. The terms "vertical", "horizontal", "upper", "lower", "left", "right" and similar expressions used herein are for illustrative purposes only and are not meant to be the only embodiments.

Unless otherwise defined, all technical and scientific terms used herein have the same meaning as commonly understood by those skilled in the art to which the present application belongs. The terms used herein in the specification of the present application are only for the purpose of describing specific embodiments, and are not intended to limit the present application. As used herein, the term "and/or" includes any and all combinations of one or more of the associated listed items.

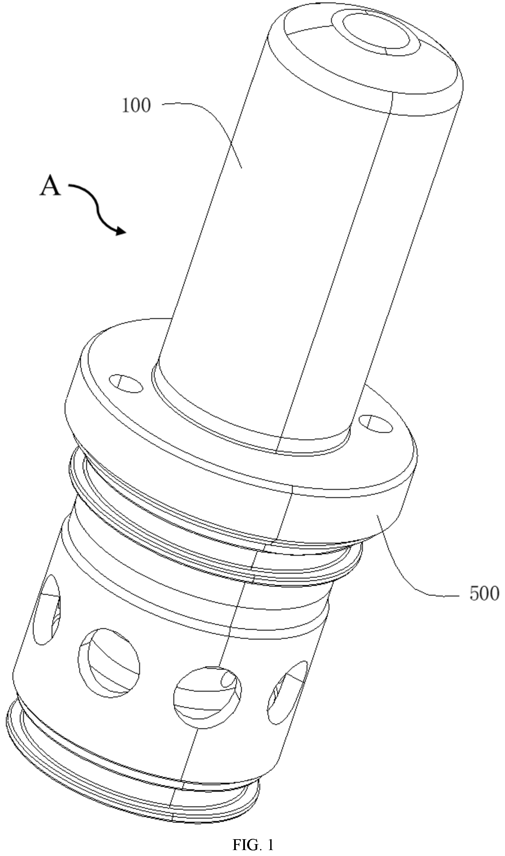

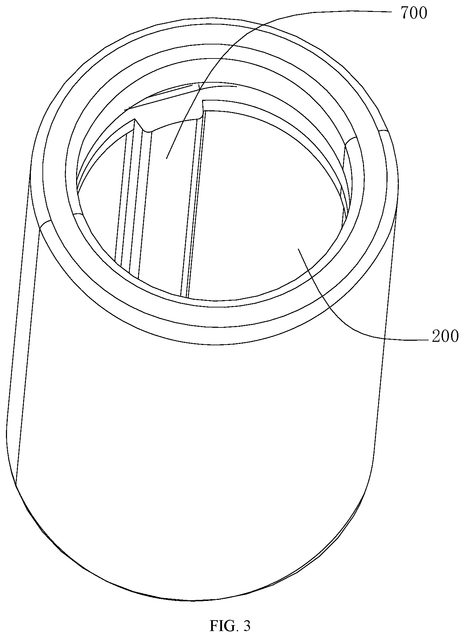

Referring to FIG. 1 to FIG. 5, the present application provides an electronic expansion valve A, which includes a housing 100, a stator assembly, a rotor assembly 200, a lead screw 300, a valve core assembly 400, and a valve seat assembly 500. The housing 100 covers and is configured to accommodate the outer sides of the rotor assembly 200, a part of the lead screw 300 and a part of the valve core assembly 400 and is connected to the valve seat assembly 500 by welding. The stator assembly is sleeved on an outside of the housing 100, and the stator assembly can drive the rotor assembly 200 to rotate. The valve seat assembly 500 is provided with a valve port portion 510, the valve core assembly 400 is movable relative to the valve seat assembly 500 along an axial direction of the lead screw 300. One end of the lead screw 300 is fixedly connected to the rotor assembly 200, and another end of the lead screw 300 is threadedly connected with the valve core assembly 400. The rotor assembly 200 is configured to drive the valve core assembly 400 to move towards or away from the valve port portion 510 through the lead screw 300.

The electronic expansion valve A further includes a stop ring 600, a guide rod 700 and a stop seat 800, and the stop seat 800 is sleeved outside the lead screw 300 and fixedly connected to the valve seat assembly 500. An outer guide portion 810 (i.e., an external threaded guide in this embodiment) is further disposed on an outer peripheral side of the stop seat 800 away from the lead screw 300, the stop ring 600 is sleeved on the outer periphery of the stop seat 800 and is movably engaged with the outer guide portion 810. The guide rod 700 is fixedly connected to the rotor assembly 200 or the lead screw 300, and the rotor assembly 200 can drive the guide rod 700 to push the stop ring 600 to spiral along the outer guide portion 810.

The valve core assembly 400 includes a sliding portion 410, a first valve needle 420 and a second valve needle 430. An end of the lead screw 300 away from the rotor assembly 200 is in threaded engagement with the sliding portion 410. The lead screw 300 can drive the sliding portion 410 through the first valve needle 420 to drive the second valve needle 430 to open or close the valve port portion 510. The second valve needle 430 is provided with an adjustment channel 431 in communication with the valve port portion 510. A flow area of the adjustment channel 431 is smaller than that of the valve port portion 510. The lead screw 300 can drive the sliding portion 410 to move the first valve needle 420 into movable engagement with the adjustment channel 431, so as to control the liquid inlet amount of the adjustment channel 431.

In this way, the lead screw 300 may be rotated along a predetermined direction first to drive the sliding portion 410 to move the first valve needle 420 and the second valve needle 430 to close the valve port portion 510, and then the lead screw 300 is rotated along a direction opposite to the predetermined direction to drive the sliding portion 410 to move the first valve needle 420 along a direction away from the adjustment channel 431, thereby achieving fine adjustment of the liquid inlet amount at the adjustment channel 431.

In some embodiments, the sliding portion 410 is configured as a slide nut.

In an embodiment, the electronic expansion valve A further includes a first elastic member 910, one end of the first elastic member 910 is connected to the lead screw 300, and another end of the first elastic member 910 is connected to the stop seat 800 or the valve seat assembly 500. The connection herein includes abutment. The first elastic member 910 is a compression elastic member, so that the lead screw 300 and the stop seat 800 (or the valve seat assembly 500) can be movably fitted along the axial direction of the lead screw 300 via the first elastic member 910.

When the valve core assembly 400 moves to a position where the valve port portion 510 is closed, and the rotor assembly 200 continues to rotate, neither the first valve needle 420 nor the second valve needle 430 can continue to move towards the valve port portion 510. Since the lead screw 300 and the valve seat assembly 500 can be movably fitted with each other along the axial direction of the lead screw 300 via the first elastic member 910, the lead screw 300 and the rotor assembly 200 move towards away from the valve port portion 510, and the first elastic member 910 is squeezed during the movement of the lead screw 300, and under the push of the reaction force, the first elastic member 910 generates an elastic force on the lead screw 300, which can drive the lead screw 300 to move the valve core assembly 400 to further squeeze the valve port portion 510, so as to generate a pre-tightening force on the valve port portion 510 and improve a sealing performance between the valve port portion 510 and the second valve needle 430.

Specifically, in an embodiment, the first elastic member 910 is configured as a compression spring or a metal elastic sheet.

In an embodiment, the electronic expansion valve A further includes a second elastic member 920. One end of the second elastic member 920 abuts against the second valve needle 430, and another end of the second elastic member 920 abuts against the valve seat assembly 500. The second elastic member 920 is configured as a compression elastic member, so that the second valve needle 430 has a tendency to move toward the valve mouth portion 510.

In this way, the second valve needle 430 is constantly driven by the second elastic member 920, which can prevent the second valve needle 430 from shaking left and right, thereby facilitating the centering of the first valve needle 420 relative to the adjustment channel 431.

Specifically, in an embodiment, the second elastic member 920 is configured as a compression spring, and the second elastic member 920 is sleeved outside a part of the second valve needle 430 and a part of the sliding portion 410.

In this way, driving force of the second elastic member 920 to the second valve needle 430 can be controlled.

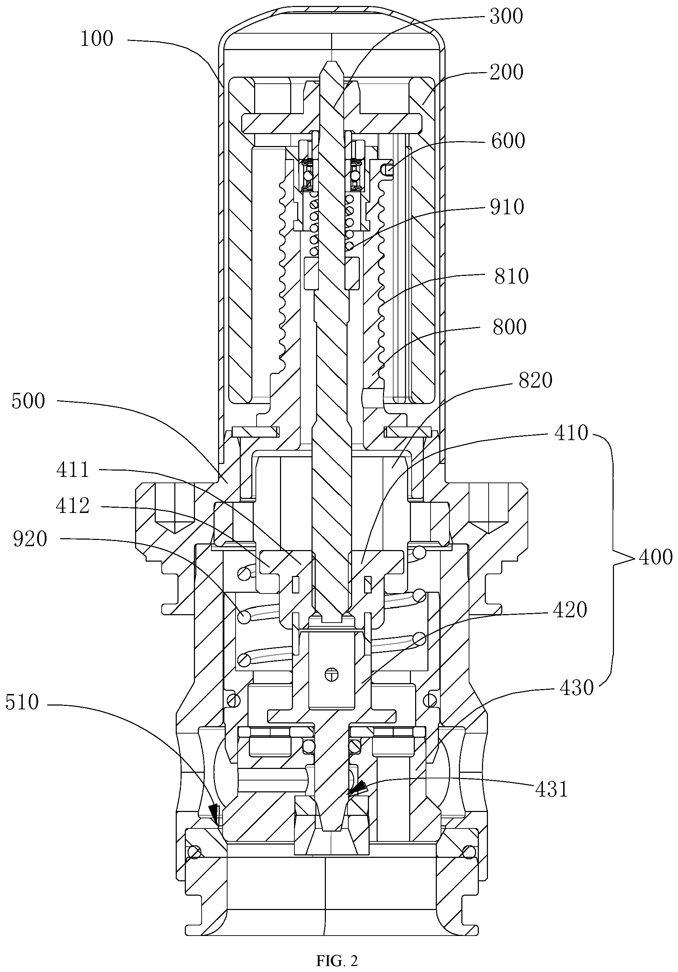

In an embodiment, referring to FIG. 2, FIG. 4 and FIG. 5, the electronic expansion valve A further includes a guide seat 820, the guide seat 820 is disposed at an end of the stop seat 800 adjacent to the valve port portion 510 and is connected to the valve seat assembly 500, and the sliding portion 410 is movably engaged with the guide seat 820 along a predetermined axial direction. The valve core assembly 400 and the guide seat 820 are in limiting engagement along a circumferential direction around the predetermined axial direction. Therefore, there is no need to machine a sliding groove on the stop seat 800 that is in limiting engagement with the valve core assembly 400, and only one guide seat 820 needs to be separately processed, which reduces the difficulty of limiting a rotation of the valve core assembly 400.

Specifically, the guide seat 820 is in interference fit connection with the valve seat assembly 500, and the top of the guide seat 820 extends into the stop seat 800.

It should be noted that the predetermined axial direction, the axial direction of the lead screw 300, the axial direction of the stop seat 800, the axial direction of the valve core assembly 400, the axial direction of the rotor assembly 200 and the axial direction of the electronic expansion valve A are all in a same direction, that is, in the electronic expansion valve A, the lead screw 300, the stop seat 800 and the valve core assembly 400 are all coaxially arranged.

Since the guide seat 820 and the stop seat 800 are connected to the valve seat assembly 500, respectively, and the guide seat 820 and the stop seat 800 are independent members, the guide seat 820 can be processed independently, which greatly reduces the processing difficulty of the guide seat 820 and the stop seat 800.

Specifically, in an embodiment, the guide seat 820 is configured as a metal piece, and specifically, the guide seat 820 is made of an aluminum alloy material, a stainless steel material, a copper alloy material, or the like, which is not illustrated in detail herein.

In this way, a wear resistance of the guide seat 820 axially matching with the sliding portion 410 is increased, and a processing cost of the guide seat 820 is reduced.

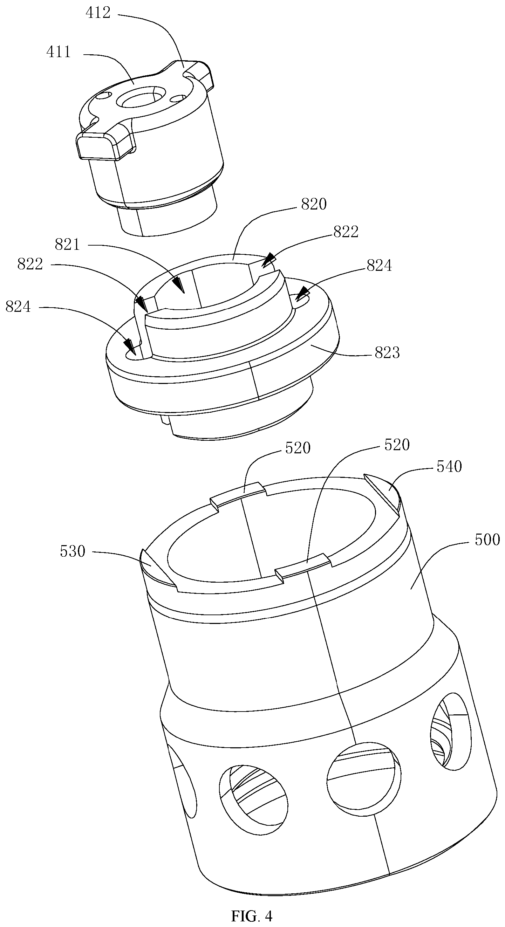

Furthermore, in an embodiment, referring to FIG. 2 and FIG. 4, the sliding portion 410 includes a nut main body 411 and an anti-rotation protrusion 412. The anti-rotation protrusion 412 is fixedly disposed on an outer peripheral side of the nut main body 411. The guide seat 820 is provided with a main body channel 821 and a limiting channel 822 in communication with the main body channel 821. The nut main body 411 is movably engaged with the main body channel 821 along the predetermined axial direction. The anti-rotation protrusion 412 is movably engaged with the limiting channel 822 along the predetermined axial direction and is in limiting engagement with the limiting channel along a circumferential direction around the predetermined axial direction.

That is, the anti-rotation protrusion 412 does not affect the movable fit between the sliding portion 410 and the guide seat 820 along the predetermined axial direction, but under a limiting action of the limiting channel 822, the anti-rotation protrusion 412 cannot rotate around the predetermined axial direction, that is, the sliding portion 410 cannot rotate relative to the guide seat 820.

In an embodiment, the main body channel 821 and the limiting channel 822 both penetrate the guide seat 820 along the predetermined axial direction.

Specifically, the number of the anti-rotation protrusions 412 may be one or more, for example, when the number of the anti-rotation protrusions 412 is two, the two anti-rotation protrusions 412 are disposed at two opposite ends of the nut body 411, and for the convenience of processing, a plurality of the anti-rotation protrusions 412 are evenly spaced along the direction around the predetermined axial direction.

In an embodiment, referring to FIG. 2, FIG. 4 and FIG. 5, the guide seat 820 is in a cylindrical shape, the main body channel 821 and the guide seat 820 are coaxially arranged, and the limiting channel 822 penetrates through a side wall of the guide seat 820 along the predetermined axial direction. Of course, the limiting channel 822 may not penetrate through the side wall of the guide seat 820.

It should be noted that when one limiting channel 822 also penetrates the side wall of the guide seat 820 along a radial direction, the guide seat 820 is in a "C" shape with a notch on one side.

When a length of the anti-rotation protrusion 412 along a radial direction of the guide seat 820 is greater than or equal to a thickness of the side wall of the guide seat 820, the limiting channel 822 penetrates through the side wall of the guide seat 820 along the radial direction of the guide seat 820. In this way, the guide seat 820 is separated by the limiting channel 822. In order to improve a structural strength of the guide seat 820, in this embodiment, referring to FIG. 2, FIG. 4 and FIG. 5, the first connecting member 823 is fixedly sleeved on an outer peripheral side of the guide seat 820. Specifically, the first connecting member 823 is sleeved in a middle of the guide seat 820, and the first connecting member 823 and the guide seat 820 are integrally formed.

Furthermore, when the length of the anti-rotation protrusion 412 continues to extend, in an embodiment, referring to FIG. 2, FIG. 4 and FIG. 5, the first connecting member 823 is provided with a through channel 824 penetrating through itself along the predetermined axial direction, and the through channel 824 is in communication with an end of the limiting channel 822 away from the main body channel 821.

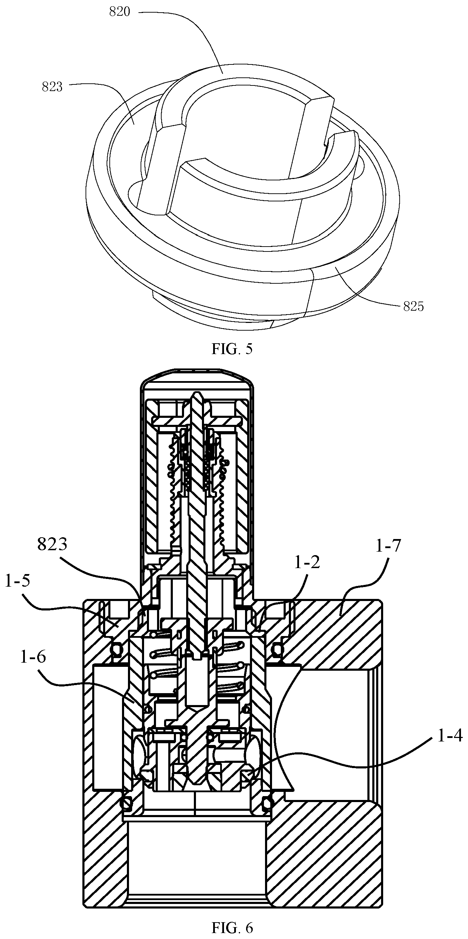

In an embodiment, referring to FIG. 4 and FIG. 5, one end of the guide seat 820 adjacent to the valve port portion 510 is provided with a ring-shaped convex rib 825. The valve seat assembly 500 is provided with a clamping protrusion 520 corresponding to the convex rib 825. The clamping protrusion 520 can be clamped into the convex rib 825 along the predetermined axial direction to prevent the guide seat 820 from rotating relative to the valve seat assembly 500. In this way, during assembly, the guide seat 820 may be pressed along the predetermined axial direction, so that the clamping protrusion 520 is clamped into the convex rib 825, thereby preventing the guide seat 820 from rotating relative to the valve seat assembly 500.

Specifically, there may be one or more clamping protrusions 520. When there are a plurality of clamping protrusions 520, the plurality of clamping protrusions 520 are disposed on the valve seat assembly 500 along a direction around the predetermined axial direction.

However, it is not limited thereto, in another embodiment, the convex rib 825 may also be disposed on the valve seat assembly 500, and the guide seat 820 is provided with a clamping protrusion 520 corresponding to the convex rib 825.

In an embodiment, referring to FIG. 4, an end of the valve seat assembly 500 adjacent to the guide seat 820 is provided with a first limiting protrusion 530 and a second limiting protrusion 540 opposite to each other. The guide seat 820 is sandwiched between the first limiting protrusion 530 and the second limiting protrusion 540.

In this way, the guide seat 820 can be limited to prevent the guide seat 820 from tilting when the convex rib 825 is deformed.

Referring to FIG. 6 to FIG. 8, in an embodiment, the guide seat 820 has a second connecting member 1-2 in addition to the first connecting member 823. Specifically, the first seat body 1-5 has a first mounting groove 1-1, and an end portion of the second seat body 1-6 is located in the first mounting groove 1-1. An outermost periphery of the guide seat 820 is provided with the second connecting member 1-2, and the second connecting member 1-2 is sandwiched between the bottom wall of the first mounting groove 1-1 and the end of the second seat body 1-6. A bottom wall of the first mounting groove 1-1 has a through hole, and the first mounting groove 1-1 makes an inner wall of the first seat body 1-5 be in an L-shape. Two end surfaces towards of the second connecting member 1-2 along the axial direction abuts against the first seat body 1-5 and the second seat body 1-6, respectively, and the second connecting member 1-2 is clamped firmly by the first seat body 1-5 and the second seat body 1-6 to prevent the guide seat 820 from rotating.

A circumferential outer wall of the second connecting member 1-2 is spaced apart from a circumferential inner wall of the first mounting groove 1-1, which can prevent the second connecting member 1-2 from being difficult to be mounted in the first seat body 1-5 due to an excessively large size along the radial direction of the electronic expansion valve. The circumferential outer wall of the second connecting member 1-2 specifically refers to an annular side wall located between two end surfaces towards of the second connecting member 1-2. The circumferential inner wall of the first mounting groove 1-1 specifically refers to an annular inner wall along the axial direction of the electronic expansion valve.

The second connecting member 1-2 is located on a periphery of the first connector 823. The first seat body 1-5 has a second mounting groove 1-3, a bottom wall of the second mounting groove 1-3 has a through hole, and the second mounting groove 1-3 makes the inner wall of the first seat body 1-5 be in an L-shape. A bottom wall of the first mounting groove 1-1 is recessed along a direction away from the valve port to form the second mounting groove 1-3. A circumferential outer wall of the first connecting member 823 is fixedly connected to the circumferential inner wall of the second mounting groove 1-3, which can further prevent the guide seat 820 from rotating, where the fixed connection includes a detachable movable connection. The circumferential outer wall of the first connector 823 specifically refers to an annular wall substantially along the axial direction. The circumferential inner wall of the second mounting groove 1-3 specifically refers to an annular inner wall along the axial direction.

The circumferential outer wall of the first connecting member 823 and a circumferential inner wall of the second mounting groove 1-3 may be fixedly connected in a threaded connection manner. In order to avoid a deformation of the guide seat 820 caused by an extrusion of an end of the first connecting member 823 away from the second connecting member 1-2 and the bottom wall of the second mounting groove 1-3 during a threaded connection, after the first connecting member is mounted, the end of the first connecting member 823 away from the second connecting member 1-2 is spaced apart from the bottom wall of the second mounting groove 1-3.

The specific installation process of the guide seat 820 is as follows: the guide seat 820 is threadedly connected to the first seat body 1-5 until the second connecting member 1-2 abuts against the first seat body 1-5, and at this time, the installation between the guide seat 820 and the first seat body 1-5 is in place; then, the second seat body 1-6 is installed, specifically, after the second seat body 1-6 abuts against a surface of the second connecting member 1-2 away from the first seat body 1-5, the second seat body 1-6 is fixedly connected to the first seat body 1-5, and at this time, the guide seat 820 is pressed between the first seat body 1-5 and the second seat body 1-6, and a fixing of the guide seat 820 is completed.

Referring to FIG. 6, the electronic expansion valve A further includes a mounting seat 1-7. The mounting seat 1-7 includes a mounting cavity. The second seat 1-6 is located in the mounting cavity. At least part of the first seat 1-5 is located in the mounting cavity and connected to the mounting seat 1-7. The mounting seat 1-7 has a fluid inlet and a fluid outlet. The fluid inlet is in communication with an interior of the second seat body 1-6. The valve port portion 510 is in communication with the fluid outlet.

Referring to FIG. 6, in an embodiment, a material of the valve port portion 510 may be metal, in order to avoid a problem of poor sealing performance between the second valve needle 430 made of metal and the valve port portion 510 made of metal, the second valve needle 430 may be provided with a sealing member 1-4, a hardness of the sealing member 1-4 is less than that of the valve port portion 510, a material of the sealing member 1-4 may be rubber or plastic, and the sealing member 1-4 is in sealing engagement with the valve port portion 510 to ensure that no leakage occurs when the valve port portion 510 is closed.

Referring to FIG. 1, FIG. 9 and FIG. 10, in an embodiment of the present application, the valve seat assembly 500 is provided with a valve cavity 101. The valve cavity 101 is provided with a first valve port 511. At least part of the guide seat 820 is disposed in the valve cavity 101 of the valve seat assembly 500 and fixedly connected to the valve seat assembly 500, and a material hardness of the guide seat 820 is less than that of the valve seat assembly 500. On this basis, a cavity wall of the valve cavity 101 is provided with a first positioning surface 512, the first positioning surface 512 facing the guide seat 820 and is located on a side of the guide seat 820 facing the first valve port 511. The guide seat 820 has a second positioning surface 82101 facing the first positioning surface 512. The first positioning surface 512 is provided with a positioning protrusion 513, and accordingly, the positioning protrusion 513 abuts against the guide seat 820 (for example, the second positioning surface 82101), so that the guide seat 820 with relatively small material hardness is deformed, thereby realizing a positioning function of the valve seat assembly 500 and the guide seat 820 axially and circumferentially. Through the above structural design, the present application can use the positioning protrusion 513 to abut against the valve seat assembly 500 or the guide seat 820 to deform the valve seat assembly 500 or the guide seat 820, so that the deformed guide seat 820 and the valve seat assembly 500 are in upper limit fit along the circumferential direction, thereby preventing the guide seat 820 and the valve seat assembly 500 from relative rotation along the circumferential direction or relative displacement along the axial direction, and achieving reliable positioning of the guide seat 820.

It should be noted that, in an embodiment not shown in the present application, the material hardness of the guide seat 820 may also be greater than a material hardness of the valve seat assembly 500. Based on this, the positioning protrusion 513 may be disposed on the guide seat 820, that is, the positioning protrusion 513 is located on the second positioning surface 82101, and accordingly, the positioning protrusion 513 abuts against the valve seat assembly 500 (for example, the first positioning surface 512), so that the valve seat assembly 500 with a relatively small material hardness is deformed, thereby implementing a positioning function of the valve seat assembly 500 and the guide seat 820 axially and circumferentially. In other words, in various possible embodiments consistent with the design concept of the present application, the material hardness of the guide seat 820 is different from the material hardness of the valve seat assembly 500, and one of the guide seat 820 and the valve seat assembly 500 with the greater material hardness is provided with the positioning protrusion 513, the positioning protrusion 513 is located on the first positioning surface 512 or the second positioning surface 82101, and the positioning protrusion 513 abuts against the other one of the valve seat assembly 500 and the guide seat 820 which has a smaller material hardness.

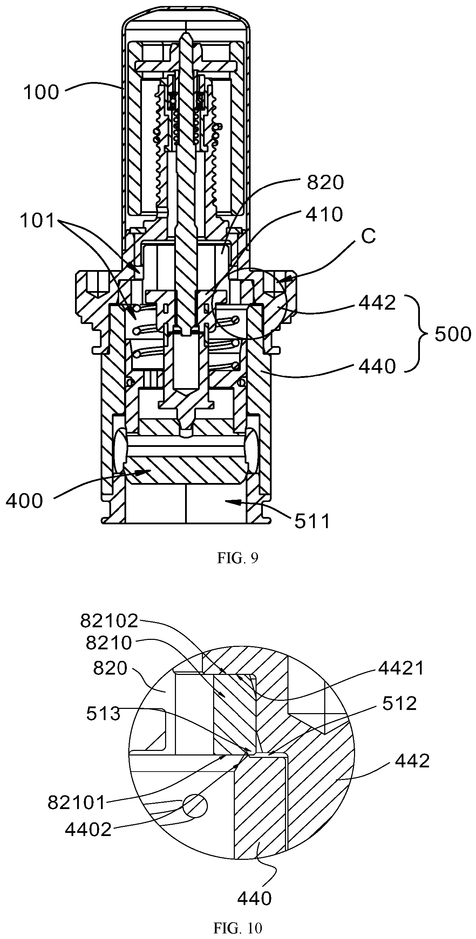

Referring to FIG. 9, in an embodiment of the present application, the electronic expansion valve proposed in the present application includes a valve core assembly 400, the valve core assembly 400 is disposed in the valve cavity 101 of the valve seat assembly 500, and the valve core assembly 400 can move in the valve cavity 101 along an axial direction of the valve cavity 101, thereby opening or closing the first valve port 511 (which can be specifically implemented by the first valve needle of the valve core assembly 400). The valve core assembly 400 is provided with a sliding portion 410. The sliding portion 410 is in sliding fit with the guide seat 820, and an end of the guide seat 820 away from the first valve port 511 abuts against an end wall of the valve cavity 101 away from the first valve port 511.

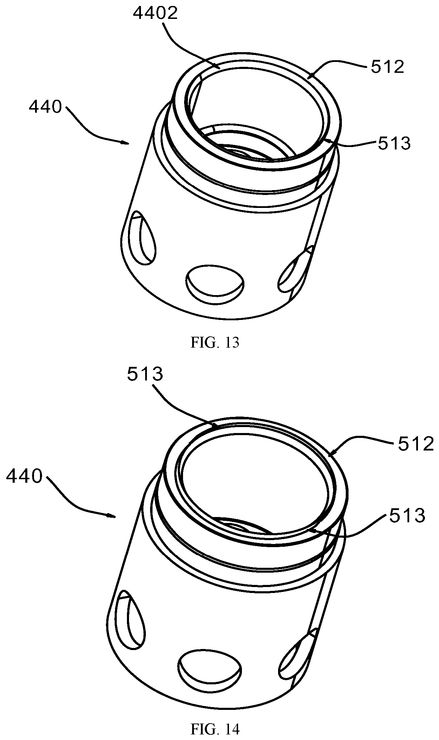

Referring to FIG. 13, in an embodiment of the present application, a reference plane perpendicular to the axial direction and parallel to the radial direction is defined, and on the reference plane, an orthographic projection of the positioning protrusion 513 may be in a closed ring shape. Through the above structural design, in the present application, the positioning protrusion 513 is designed as a closed annular structure, so that the guide seat 820 is pressed and positioned at each position along the circumferential direction, which is beneficial to simplifying the structural complexity when the positioning protrusion 513 is disposed on the valve seat assembly 500 and reducing a processing difficulty.

FIG. 14 shows a three-dimensional structural schematic view of a valve core sleeve 440 of an electronic expansion valve configured to embody the principles of the present application in another exemplary embodiment.

Different from the design in which the positioning protrusion 513 is a closed annular structure in the embodiment shown in FIG. 13, referring to FIG. 14, in another embodiment of the present application, the first positioning surface 512 (or the second positioning surface 82101) may be provided with two positioning protrusions 513. On this basis, a reference plane perpendicular to the axial direction and parallel to the radial direction is defined, on which the orthographic projections of the two positioning protrusions 513 may be disposed at intervals along a closed annular path. Through the above structural design, in the present application, the positioning protrusion 513 adopts a plurality of disconnected structural forms, so that an end of the positioning protrusion 513 along an extension direction (such as the annular path described above, i.e., the circumferential direction) can further abut against the guide seat 820, thereby further improving a positioning effect on the guide seat 820. In some embodiments, the first positioning surface 512 may also be provided with three or more positioning protrusions 513, and the orthographic projections of the positioning protrusions 513 are disposed at intervals along a closed annular path, which is not limited to the above embodiments.

Referring to FIG. 14, based on the structural design in which the first positioning surface 512 is provided with at least two positioning protrusions 513, in an embodiment of the present application, the shapes of the positioning protrusions 513 may be the same, and the at least two positioning protrusions 513 may be uniformly arranged along the above-mentioned annular path. Through the above structural design, the present application can make a positioning effect of each positioning protrusion 513 on each position of the guide seat 820 more uniform.

In an embodiment not shown in the present application, when the positioning protrusions 513 are arranged along the annular path, there may be only one positioning protrusion 513 arranged along one annular path, and the positioning protrusion 513 is in a non-closed shape, such as but not limited to a "C" shape, which is not limited to the above embodiments.

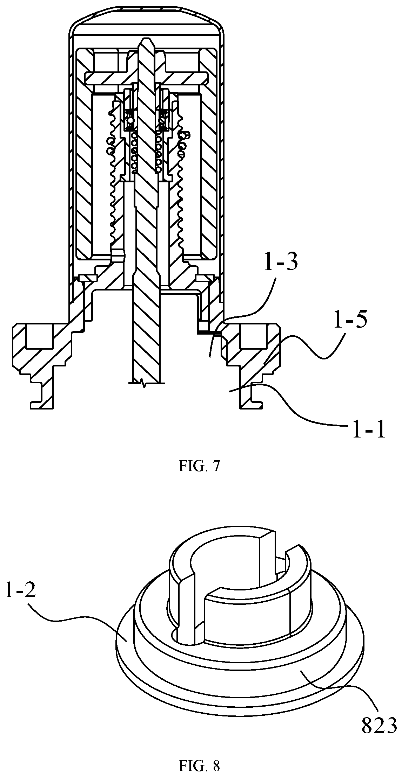

In an embodiment not shown in the present application, the first positioning surface 512 (or the second positioning surface 82101) may be provided with at least two positioning protrusions 513, and the at least two positioning protrusions 513 may be disposed at intervals along the radial direction. For example, taking the positioning protrusion 513 with a closed annular structure shown in FIG. 13 as an example, on this basis, the first positioning surface 512 may be provided with two or more positioning protrusions 513, and these positioning protrusions 513 are disposed at intervals along the radial direction in the form of a ring sleeve. For another example, taking the at least two annular protrusions disposed at intervals on the annular path shown in FIG. 14 as an example, on this basis, the first positioning surface 512 may be provided with two or more groups of positioning protrusions 513, wherein at least one group of positioning protrusions 513 may adopt, for example, the above structural design of FIG. 7, and the other groups of positioning protrusions 513 may adopt a similar structural design, or may also adopt, for example, the above structural design of FIG. 6. For another example, different from the structural design in which the positioning protrusions 513 are arranged along the annular path in the embodiment shown in FIG. 13 or FIG. 14, in other embodiments of the present application, the positioning protrusions 513 may not be arranged along the annular path (whether closed or not), on this basis, the first positioning surface 512 may be provided with at least two positioning protrusions 513, and the two positioning protrusions 513 are disposed at intervals along the radial direction.

Referring to FIG. 10, in an embodiment of the present application, the positioning protrusion 513 may have a triangular cross section. In other embodiments, the cross-section of the positioning protrusion 513 may also be in other shapes, such as but not limited to trapezoid, rectangle, arc, etc.

Referring to FIG. 1, FIG. 9 to FIG. 12, in an embodiment of the present application, the valve seat assembly 500 may include a valve core sleeve 440 and a valve cover 442 connected along the axial direction, the valve core sleeve 440 is provided with a first cavity penetrating along the axial direction, the valve cover 442 is provided with a second cavity penetrating along the axial direction, and the first valve port 511 is provided at an end of the valve core sleeve 440 towards away from the valve cover 442. On this basis, an end surface of one end of the valve core sleeve 440 facing the valve cover 442 may partially form the first positioning surface 512. Through the above structural design, in the present application, the valve core sleeve 440 and the valve cover 442 assembled with each other are used to clamp the guide seat 820, that is, a part of the end surface of the valve core sleeve 440 facing one end of the valve cover 442 is provided with the positioning protrusion 513 to realize the positioning function, and the other part is directly involved in the fixed assembly of the guide seat 820. Accordingly, in the present application, the positioning protrusion 513 can be machined when the valve core sleeve 440 is manufactured, which is beneficial to reducing an assembly difficulty and a component machining difficulty.

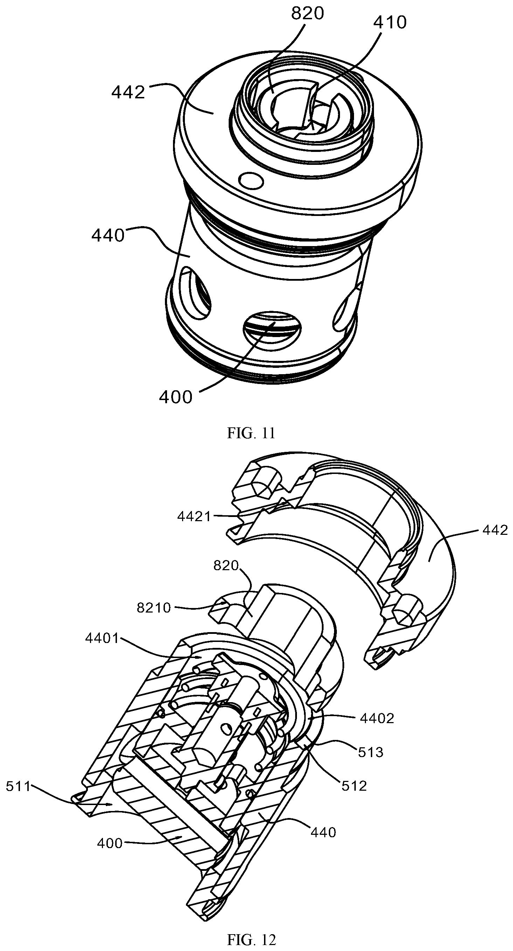

Referring to FIG. 12 and FIG. 13, based on the structural design of the valve seat assembly 500 includes the valve core sleeve 440 and the valve cover 442. In an embodiment of the present application, the positioning protrusion 513 is disposed on the valve seat assembly 500 and located on the first positioning surface 512, an end of the valve core sleeve 440 facing the valve cover 442 may be provided with a first opening 4401, and the first opening 4401 is in communication with the first cavity of the valve seat assembly 500, and accordingly, an end surface of an end of the valve core sleeve 440 facing the valve cover 442 is in an annular shape. On this basis, the positioning protrusion 513 may be disposed on an inner edge of an end surface of the valve core sleeve 440, that is, along the radial direction, the positioning protrusion 513 is spaced apart from an outer edge of the end surface of the valve core sleeve 440, so that a part of the end surface is directly used as the first positioning surface 512. In other embodiments, the positioning protrusion 513 may also be disposed in a middle of the end surface of the valve core sleeve, that is, along the radial direction, the positioning protrusion 513 is spaced apart from both the inner edge and the outer edge of the end surface, or the positioning protrusion 513 may also be disposed on the outer edge of the end surface of the valve core sleeve 440, which is not limited to the above embodiments.

Referring to FIG. 10, based on the structural design that the positioning protrusion 513 is disposed on the inner edge of the end surface of the valve core sleeve 440, in an embodiment of the present application, the cavity wall of the first cavity of the valve core sleeve 440 at the first opening 4401 thereof may be provided with an inclined surface, and the inclined surface is connected to a side surface of the positioning protrusion 513 (for example, the cross section of the positioning protrusion 513 may be triangular, trapezoidal, etc., then the side surface is also an inclined surface) as an integrated guide inclined surface 4402.

Referring to FIG. 10, based on the structural design of the valve seat assembly 500 including the valve core sleeve 440 and the valve cover 442, in an embodiment of the present application, a cavity wall of the second cavity of the valve cover 442 may be provided with a third positioning surface 4421, and the third positioning surface 4421 facing the first positioning surface 512 and is disposed at intervals along the axial direction of the valve seat assembly, such that a positioning cavity is defined between the first positioning surface 512 and the third positioning surface 4421 in the valve cavity 101. On this basis, a periphery of the guide seat 820 may be provided with a positioning boss 8210, the positioning boss 8210 is at least partially accommodated in the positioning cavity, the positioning boss 8210 has a fourth positioning surface 82102 facing the valve cover 442, the fourth positioning surface 82102 abuts against the third positioning surface 4421, and the positioning protrusion 513 abuts against a side surface of the positioning boss 8210 facing the valve core sleeve 440, that is, the side surface of the positioning boss 8210 facing the valve core sleeve 440 is configured as the second positioning surface 82101.

In an embodiment of the present application, the material hardness of the guide seat 820 may be less than that of the valve core sleeve 440, and the material hardness of the guide seat 820 may be greater than the material hardness of the sliding portion 410. For example, the sliding portion 410 may be a guide nut made of plastic, the guide seat 820 may be made of aluminum alloy or brass, and the valve core sleeve 440 may be made of stainless steel.

Based on the structural design of the valve seat assembly 500 including the valve core sleeve 440 and the valve cover 442, in an embodiment of the present application, the guide seat 820 may be press-fitted into the valve cover 442(e.g., the second cavity) in an interference fit manner. Accordingly, in the cold and hot environment formed by the fluid, the guide seat 820 may expand and contract thermally, resulting in loosening of a connection between the guide seat 820 and the valve cover 442, so it is necessary to increase the fixing strength of the guide seat 820. The guide seat 820 is pressed between the valve cover 442 and the valve core sleeve 440 and deformed, clamped by the valve cover 442 and the valve core sleeve 440, and the deformed guide seat 820 and the valve core sleeve 440 are circumferentially limited to prevent the guide seat 820 from rotating.

It should be noted herein that the electronic expansion valves shown in the drawings and described in this specification are merely a few examples of many types of electronic expansion valves that can employ the principles of the present application. It should be clearly understood that the principles of the present application are in no way limited to any details or any components of the electronic expansion valve shown in the drawings or described in this specification.

In summary, the electronic expansion valve proposed in some embodiments of the present application includes the valve seat assembly 500 and the guide seat 820. The valve seat assembly 500 is provided with the valve cavity 101, and the valve cavity 101 is provided with the first valve port 511. At least part of the guide seat 820 is disposed in the valve cavity 101 and fixedly connected to the valve seat assembly 500, and the material hardness of the guide seat 820 is different from the material hardness of the valve seat assembly 500. The cavity wall of the valve cavity 101 is provided with the first positioning surface 512. The first positioning surface 512 facing the guide seat 820 and is located on the side of the guide seat 820 facing the first valve port 511, and the guide seat 820 has the second positioning surface 82101 facing the first positioning surface 512. One of the valve seat assembly 500 and the guide seat 820 with the greater material hardness is provided with the positioning protrusion 513. The positioning protrusion 513 abuts against the other of the valve seat assembly 500 and the guide seat 820. The positioning protrusion 513 is located on the first positioning surface 512 or the second positioning surface 82101. The positioning protrusion 513 is configured to position the valve seat assembly 500 and the guide seat 820 axially and circumferentially. Through the above structural design, the present application can use the positioning protrusion 513 to abut against the valve seat assembly 500 or the guide seat 820 to deform the valve seat assembly 500 or the guide seat 820, so that the deformed guide seat 820 and the valve seat assembly 500 are in upper limit fit along the circumferential direction, thereby preventing the guide seat 820 and the valve seat assembly 500 from relative rotation along the circumferential direction or relative displacement along the axial direction, and achieving reliable positioning of the guide seat 820.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. An electronic expansion valve, **characterized by** comprising a valve core assembly and a valve seat assembly, wherein the valve seat assembly is provided with a valve port portion, and the valve core assembly is configured to open or close the valve port portion;
the electronic expansion valve further comprises a guide seat, the guide seat is disposed at an end of the valve seat assembly away from the valve port portion, and the valve core assembly and the guide seat are movably engaged with each other along a predetermined axial direction and in stopping engagement with each other along a circumferential direction around the predetermined axial direction.

2. The electronic expansion valve of claim 1, wherein a stop seat is connected to the valve seat assembly, and the stop seat is not connected to the guide seat.

3. The electronic expansion valve of claim 2, wherein a part of the stop seat extends into the valve seat assembly, and/or a part of the guide seat extends into the stop seat.

4. The electronic expansion valve of claim 1, wherein the valve core assembly comprises a sliding portion, the sliding portion comprises a nut main body and an anti-rotation protrusion, the anti-rotation protrusion is fixedly disposed on an outer peripheral side of the nut main body, the guide seat is provided with a main body channel and a limiting channel in communication with the main body channel, the nut main body is movably engaged with the main body channel along the predetermined axial direction, the anti-rotation protrusion is movably engaged with the limiting channel along the predetermined axial direction and is in limiting engagement with the limiting channel along the circumferential direction around the predetermined axial direction, and the limiting channel is disposed on a side of the main body channel along the predetermined axial direction.

5. The electronic expansion valve of claim 4, wherein a first connecting member is fixedly sleeved on an outer peripheral side of the guide seat; the first connecting member is provided with a through channel penetrating through the first connecting member along the predetermined axial direction, and the through channel is in communication with an end of the limiting channel away from the main body channel.

6. The electronic expansion valve of claim 1, wherein the guide seat is provided with a convex rib, the valve seat assembly is provided with a clamping protrusion corresponding to the convex rib, and the clamping protrusion is configured to clamp into a groove formed after the convex rib is deformed along the predetermined axial direction to prevent the guide seat from rotating relative to the valve seat assembly.

7. The electronic expansion valve of claim 1, wherein an end of the valve seat assembly adjacent to the guide seat is provided with a first limiting protrusion and a second limiting protrusion opposite to each other, and the guide seat is sandwiched between the first limiting protrusion and the second limiting protrusion.

8. The electronic expansion valve of claim 1, wherein the guide seat is configured as a metal member.

9. The electronic expansion valve of claim 1, wherein the valve seat assembly comprises a first seat body and a second seat body; an outer periphery of the guide seat is provided with a second connecting member, and the second connecting member is sandwiched between the first seat body and the second seat body.

10. The electronic expansion valve of claim 9, wherein the first seat body or the second seat body has a first mounting groove, at least part of the second connecting member is located in the first mounting groove and abuts against a bottom wall of the first mounting groove, and a circumferential outer wall of the second connecting member abuts against or is spaced apart from a circumferential inner wall of the first mounting groove.

11. The electronic expansion valve of claim 9, wherein the outer periphery of the guide seat is further provided with a first connecting member, and the second connecting member is located at an outer periphery of the first connecting member; the first seat body or the second seat body is provided with a second mounting groove, a bottom wall of the first mounting groove is recessed in a direction away from the valve port portion to form the second mounting groove, and a circumferential outer wall of the first connecting member is fixedly connected to a circumferential inner wall of the second mounting groove.

12. The electronic expansion valve of claim 11, wherein a circumferential outer wall of the first connecting member is threadedly connected with the circumferential inner wall of the second mounting groove, and an end of the first connecting member away from the second connecting member is spaced apart from a bottom wall of the second mounting groove.

13. The electronic expansion valve of claim 1, wherein the valve core assembly comprises a second valve needle, the second valve needle is provided with a sealing member, a hardness of the sealing member is less than that of the valve port portion, and the sealing member is in sealing engagement with the valve port portion.

14. The electronic expansion valve of claim 1, wherein the valve seat assembly is provided with a valve cavity, and the valve port portion comprises a first valve port;
at least part of the guide seat is disposed in the valve cavity and fixedly connected to the valve seat assembly;
wherein one of the valve seat assembly and the guide seat with a greater material hardness is provided with a positioning protrusion, the positioning protrusion abuts against the other of the valve seat assembly and the guide seat, and a material hardness of the positioning protrusion is greater than the material hardness of the valve seat assembly or the guide seat against which it abuts, so as to position the valve seat assembly and the guide seat axially and circumferentially.

15. The electronic expansion valve of claim 14, wherein a cavity wall of the valve cavity is provided with a first positioning surface facing the guide seat, and the guide seat has a second positioning surface facing the first positioning surface, and the positioning protrusion is located on one of the first positioning surface and the second positioning surface and abuts against the other of the first positioning surface and the second positioning surface.

16. The electronic expansion valve of any one of claims 14 to 15, wherein the valve seat assembly comprises a valve core sleeve and a valve cover connected in an axial direction of the valve seat assembly, the valve core sleeve is provided with a first cavity penetrating in the axial direction of the valve seat assembly, the valve cover is provided with a second cavity penetrating in the axial direction of the valve seat assembly, and the first valve port is disposed at an end of the valve core sleeve away from the valve cover; wherein an end surface of the valve core sleeve facing an end of the valve cover partially forms the first positioning surface.

17. The electronic expansion valve of claim 16, wherein the positioning protrusion is disposed on the first positioning surface, a first opening is provided at an end of the valve core sleeve facing the valve cover, and the first opening is in communication with the first cavity such that an end surface of the valve core sleeve facing the valve cover is in an annular shape; and the positioning protrusion is disposed on an inner edge of the end surface of the valve core sleeve.

18. The electronic expansion valve of claim 17, wherein a cavity wall of the first cavity at the first opening is provided with an inclined surface, and the inclined surface and a side surface of the positioning protrusion are connected as an integrated guide inclined surface.

19. The electronic expansion valve of claim 18, wherein a cavity wall of the second cavity is provided with a third positioning surface, the third positioning surface faces the first positioning surface and is disposed arranged at intervals in the axial direction of the valve seat assembly, such that a positioning cavity is defined between the first positioning surface and the third positioning surface in the valve cavity; an outer periphery of the guide seat is provided with a positioning boss, the positioning boss is at least partially accommodated in the positioning cavity, the positioning boss has a fourth positioning surface facing the valve cover, and the fourth positioning surface abuts against the third positioning surface.
